Europäisches Patentamt

(19) European Patent Office

Office européen des brevets

(11) EP 0 626 405 B1

## (12) FASCICULE DE BREVET EUROPEEN

(45) Date de publication et mention
de la délivrance du brevet:
**04.08.1999 Bulletin 1999/31**

(51) Int. Cl.⁶: **C08G 63/82**

(21) Numéro de dépôt: **94201223.8**

(22) Date de dépôt: **03.05.1994**

(54) **Procédé pour la fabrication de poly-epsilon-caprolactones et poly-epsilon-caprolactones ayant des masses moléculaires élevées pouvant être obtenues par ce procédé**

Verfahren zur Herstellung im Poly-E-Caprolactonen und nach diesem Verfahren hergestellte Poly-E-Caprolactone mit hohem Molekulargewicht

Process for the preparation of poly-E-caprolactones and poly-E-caprolactones having high molecular weights prepared thereby

(84) Etats contractants désignés:
**AT BE DE ES FR GB IT NL**

(30) Priorité: **17.05.1993 BE 9300507**

(43) Date de publication de la demande:
**30.11.1994 Bulletin 1994/48**

(73) Titulaire:
**SOLVAY (Société Anonyme)**
**1050 Bruxelles (BE)**

(72) Inventeur: **Wautier, Henri**
**B-7090 Braine-Le-Comte (BE)**

(74) Mandataire: **Eischen, Roland et al**
**Solvay & Cie**
**Département de la Propriété Industrielle**
**Rue de Ransbeek 310**
**1120 Bruxelles (BE)**

(56) Documents cités:
**EP-A- 0 255 941**     **EP-A- 0 372 221**
**US-A- 3 021 313**

- **MACROMOLECULES. vol. 21, no. 2 , 1988 , EASTON US pages 286 - 293 HANS R. KRICHELDORF ET AL 'Poly(lactones). Polymerization Mechanism of Metal Alkoxide Initiated Polymerizations of Lactide and Various Lactones'**

Remarques:
Le dossier contient des informations techniques présentées postérieurement au dépôt de la demande et ne figurant pas dans le présent fascicule.

**Description**

La présente invention concerne un procédé pour la fabrication de poly-$\varepsilon$-caprolactones, ainsi que des poly-$\varepsilon$-caprolactones de masses moléculaires élevées pouvant être obtenues par ce procédé.

L'invention concerne plus particulièrement un procédé pour la fabrication de poly-$\varepsilon$-caprolactones par polymérisation continue d'$\varepsilon$-caprolactone en masse fondue dans une extrudeuse.

Les poly-$\varepsilon$-caprolactones de masses moléculaires élevées constituent des polymères thermoplastiques biocompatibles et biodégradabables bien connus présentant une compatibilité élevée avec de nombreux polymères thermoplastiques et élastomériques et trouvant des débouchés multiples dans des domaines aussi divers que l'orthopédie (prothèses), la pharmacie (enrobage de médicaments en vue de la délivrance contrôlée du principe actif), la médecine (solutions pour la protection temporaire de brûlures graves), l'agriculture (films de protection), la peinture et les revêtements etc.

Pour toutes les applications impliquant la transformation des poly-$\varepsilon$-caprolactones en articles finis ou semi-finis par mise en oeuvre des poly-$\varepsilon$-caprolactones en fondu, il est hautement souhaitable de disposer de poly-$\varepsilon$-caprolactones solides de masses moléculaires moyennes en poids ($M_w$) élevées et au moins égales à environ 95 000 g/mole au moins.

Il est bien connu de fabriquer des poly-$\varepsilon$-caprolactones de masses moléculaires moyennes en poids élevées par polymérisation d'$\varepsilon$-caprolactone en masse à l'intervention de catalyseurs ou encore d'amorceurs de polymérisation tels que des sels organiques ou inorganiques d'étain ou encore des organoétains.

Dans le brevet belge BE-A-775 479 (DEGUSSA), on décrit un procédé discontinu permettant de produire des poly-$\varepsilon$-caprolactones dont les masses moléculaires moyennes en poids s'élèvent à plusieurs dizaines de milliers à l'intervention d'initiateurs constitués par des composés organiques de l'étain, tels que des alcoolates d'alkylétain comme par exemple le méthylate de tributylétain. Toutefois, les durées de polymérisation s'élèvent à plusieurs heures, ce qui rend le procédé peu attractif industriellement en raison de sa faible productivité. En outre, la production de poly-$\varepsilon$-caprolactones de masses moléculaires moyennes en poids élevées pose des problèmes pratiques aigus pour isoler le polymère du réacteur en fin du cycle de polymérisation.

En vue de pallier ces problèmes inhérents à la fabrication en discontinu de polyesters de masses moléculaires moyennes élevées, on a déjà proposé de produire des polyesters résorbables par polymérisation continue de glycolides, lactides et/ou de lactones dans une extrudeuse (demande de brevet EP-A- 0 372 221 au nom de BOEHRINGER INGELHEIM KG), c'est-à-dire par extrusion réactive. Ce document divulgue, en toute généralité, la possibilité de produire des poly-$\varepsilon$-caprolactones. Toutefois, les seuls catalyseurs ou amorceurs de polymérisation envisagés et par ailleurs décrits comme préférés dans ce document sont l'octoate d'étain et les sels d'étain, tels que par exemple le chlorure stanneux. Ce procédé s'est révélé inapplicable en pratique à la fabrication de poly-$\varepsilon$-caprolactones par polymérisation continue d'$\varepsilon$-caprolactone dans une extrudeuse, étant donné que les catalyseurs préconisés nécessitent des durées de polymérisation de plusieurs heures pour atteindre des taux de conversion en poly-$\varepsilon$-caprolactone qui soient industriellement acceptables.

La présente invention a pour objet un procédé pour la fabrication de poly-$\varepsilon$-caprolactones par polymérisation continue dans une extrudeuse (extrusion réactive) qui permette la production de poly-$\varepsilon$-caprolactones solides de masses moléculaires moyennes en poids variables à souhait, y compris de masses moléculaires moyennes en poids très élevées, et ce, avec une productivité extrêmement élevée, c'est-à-dire pour des temps moyens de séjour de la matière dans l'extrudeuse ne dépassant pas quelques dizaines de minutes, voire quelques minutes.

A cet effet, la présente invention concerne un procédé pour la fabrication de poly-$\varepsilon$-caprolactones par polymérisation continue d'$\varepsilon$-caprolactone en masse fondue dans une extrudeuse à l'intervention d'un amorceur de polymérisation, caractérisé en ce que l'amorceur de polymérisation est choisi parmi les alkoxydes d'aluminium.

Par polymérisation en masse fondue, on entend désigner ci-après la polymérisation en l'absence substantielle de solvant ou de diluant à une température au moins égale à la température de fusion des poly-$\varepsilon$-caprolactones produites.

Par extrudeuse, on entend désigner aux fins de la présente invention tout dispositif continu comprenant une zone d'alimentation et une zone d'évacuation au travers duquel la matière en fusion est forcée à passer avec des temps de séjour moyens ne dépassant pas environ 30 minutes.

Par poly-$\varepsilon$-caprolactones, on entend désigner aux fins de la présente invention aussi bien les homopolymères de l'$\varepsilon$-caprolactone que les copolymères d'$\varepsilon$-caprolactone avec d'autres lactones à teneur pondérale prépondérante en $\varepsilon$-caprolactone, tels que par exemple, les copolymères d'$\varepsilon$-caprolactone et de $\beta$-propiolactone ou encore les copolymères d'$\varepsilon$-caprolactone et de $\delta$-valérolactone à teneur prépondérante en $\varepsilon$-caprolactone. Il est donc entendu que le procédé de l'invention s'applique aussi bien à l'homopolymérisation de l'$\varepsilon$-caprolactone qu'à sa copolymérisation avec d'autres lactones. Néanmoins, le procédé selon l'invention convient particulièrement pour la fabrication de poly-$\varepsilon$-caprolactones par homopolymérisation d'$\varepsilon$-caprolactone.

Par alkoxyde d'aluminium, on entend désigner aux fins de la présente invention, les composés organoalumi-

2

niques comprenant au moins un lien aluminoxane-carbone (> Al-O-C-) et les mélanges de tels composés organoaluminiques.

L'article au nom de Hans R. Kricheldorf et al. paru dans Macromolecules **1988,** 21, pp. 286-293 et intitulé "Poly(lactones). Polymerization Mechanism of Metal Alkoxide Initiated Polymerization of Lactide and Various Lactones" reproduit un tableau dans lequel figurent les résultats comparatifs de la polymérisation en discontinu de l'ε-caprolactone en masse à 100 °C à l'intervention de divers alkoxydes de métaux, tels que l'isopropylate d'aluminium et le méthylate de dibutylétain, dont il apparaît qu'après un cycle de polymérisation d'une durée de 24 heures, ces divers alkoxydes conduisent à des rendements en poly-ε-caprolactone sensiblement identiques, de l'ordre de 90 %.

Il a dès lors été surprenant de constater que, contrairement aux alkoxydes d'étain, les amorceurs de polymérisation du type des alkoxydes d'aluminium tels que définis ci-dessus permettent de produire endéans quelques minutes, généralement endéans environ 30 minutes au maximum et avec des taux de conversion et des rendements très élevés, généralement largement supérieurs à 95 % en poids, des poly-ε-caprolactones solides de masses moléculaires moyennes en poids élevées, ce qui en fait des amorceurs de polymérisation de choix pour la polymérisation continue d'ε-caprolactone en masse fondue dans une extrudeuse.

Des exemples d'alkoxydes d'aluminium convenant comme amorceurs de polymérisation dans le procédé de l'invention sont ceux répondant à la formule générale ci-dessous :

$$(R')_{3-n}\text{-Al-}(O\text{-}R)_n$$

dans laquelle :

- R et R' représentent indépendemment l'un de l'autre un radical hydrocarboné linéaire ou ramifié; et
- n représente un nombre allant de 1 à 3.

Parmi ceux-ci, on donne la préférence, aux alkoxydes d'aluminium de formule générale ci-dessus dans laquelle R et R' représentent indépendemment l'un de l'autre un radical alkyle linéaire ou ramifié contenant de 1 à 16 atomes de carbone, et plus particulièrement encore, de 2 à 8 atomes de carbone. D'excellents résultats ont été obtenus avec des alkoxydes de formule générale ci-dessus dans laquelle R et R' sont identiques et représentent un radical alkyle linéaire ou ramifié contenant de 2 à 6 atomes de carbone.

A titre d'exemples de pareils alkoxydes d'aluminium préférés, on peut mentionner les mono-, di- et triéthoxydes d'aluminium, les mono-, di- et tripropoxydes d'aluminium, les mono-, di-et tri-isopropoxydes d'aluminium, les mono-, di- et tributoxydes d'aluminium et les mono-, di- et tri-sec-butoxydes d'aluminium. D'excellents résultats ont été obtenus avec le tri-isopropoxyde d'aluminium (ou encore tri-2-propanolate d'aluminium) et avec le tri-sec butoxyde d'aluminium (ou encore tri-2-butanolate d'aluminium). Ce dernier présente l'avantage d'être liquide à température ambiante.

Les alkoxydes solides à température ambiante seront avantageusement introduits dans l'extrudeuse sous la forme d'une solution dans un solvant organique inerte, tel que par exemple l'hexane, l'heptane ou le toluène.

Les alkoxydes d'aluminium constituent des produits bien connus. Ils peuvent, par exemple, être obtenus par mise en réaction en des quantités appropriées d'un alkylaluminium ($R_3$'Al) avec un composé organique hydroxylé de formule R-OH, R' et R ayant les significations décrites et définies en relation avec la formule générale ci-dessus.

La quantité d'amorceur de polymérisation à mettre en oeuvre à la polymérisation de l'ε-caprolactone peut varier dans des limites assez larges et dépend essentiellement des masses moléculaires moyennes en poids ($M_w$) visées pour les poly-ε-caprolactones. Il a en effet été constaté qu'il existe une relation pratiquement linéaire, indépendante de la température de polymérisation, entre le rapport des débits d'alimentation de l'extrudeuse en ε-caprolactone et en amorceur de polymérisation, d'une part, et la masse moléculaire moyenne en poids ($M_w$) de la poly-ε-caprolactone produite, d'autre part.

Le procédé selon l'invention permet la fabrication de polyε-caprolactones de masses moléculaires moyennes en poids ($M_w$) approximatives pré-établies par réglage des débits d'alimentation de l'extrudeuse en ε-caprolactone et en amorceur de polymérisation calculés en conformité avec l'équation suivante :

$$M_W = \frac{2,25}{n} \times \frac{\text{débit d'alimentation en } \varepsilon\text{-caprolactone (en g/min)}}{\text{débit d'alimentation en amorceur (nb de moles d'Al/min)}}$$

dans laquelle n a la même signification que dans la formule générale des alkoxydes ci-dessus, c'est-à-dire que n représente le nombre de liens aluminoxane-carbone présents dans une mole d'amorceur de polymérisation (et nb est l'abréviation du mot "nombre").

Il est bien entendu qu'idéalement tous les réactifs mis en oeuvre dans le procédé de polymérisation selon l'invention doivent être anhydres. Néanmoins, des teneurs résiduelles en eau ne dépassant pas 200 mg/kg de lactone et plus particulièrement encore ne dépassant pas 100 mg/kg de lactone pourront être tolérées, car elles n'ont pas d'influence significative sur la masse moléculaire moyenne en poids des poly-$\varepsilon$-caprolactones produites selon le procédé de l'invention.

Un avantage du procédé de l'invention réside donc dans la possibilité de produire "à façon" des poly-$\varepsilon$-caprolactones ayant des masses moléculaires moyennes en poids approximatives préétablies par mise en oeuvre de quantités calculées et appropriées d'amorceur de polymérisation selon l'invention. Des poly-$\varepsilon$-caprolactones présentant des masses moléculaires moyennes en poids très variables allant d'environ 20 000 à environ 600 000 g/mole ont pu être produites sans problème endéans quelques minutes par extrusion continue d'$\varepsilon$-caprolactone suivant le procédé de l'invention. Néanmoins, celui-ci présente un intérêt tout particulier pour la fabrication de poly-$\varepsilon$-caprolactones de masses moléculaires moyennes en poids tellement élevées qu'il est malaisé de les isoler des réacteurs en fin de cycle de polymérisation en discontinu. C'est pourquoi le procédé de l'invention s'applique de préférence à la fabrication de poly-$\varepsilon$-caprolactones ayant des masses moléculaires moyennes en poids ($M_w$) au moins égales à 75 000 g/mole environ, et plus particulièrement au moins égales à 95 000 g/mole environ.

L'absence d'effet significatif de la température de polymérisation (c'est-à-dire de la température de la matière dans l'extrudeuse) sur les masses moléculaires des poly-$\varepsilon$-caprolactones produites présente par ailleurs l'avantage que des écarts de température entre les différentes zones de l'extrudeuse n'ont donc pas d'effet significatif sur les masses moléculaires des poly-$\varepsilon$-caprolactones produites. De fait, la température de polymérisation influe essentiellement sur la vitesse de polymérisation. Dans le procédé selon l'invention la température dans l'extrudeuse peut donc sans inconvénient fluctuer dans une assez large mesure, pourvu qu'elle soit au moins égale à la température de fusion des poly-$\varepsilon$-caprolactones produites. Pour fixer les idées, la température minimale pour l'homopolymérisation de l'$\varepsilon$-caprolactone se situera à 60 °C. Des températures plus élevées permettent d'accélérer la vitesse de polymérisation. Néanmoins, en pratique on ne dépassera généralement pas 200 °C et, de préférence pas environ 185 °C, de manière à éviter tout risque de dégradation des poly-$\varepsilon$-caprolactones produites.

Par ailleurs, on choisira la température de polymérisation de manière à atteindre des taux de conversion et des rendements proches de 100 % pour des temps de séjour moyens de la masse réactionnelle dans l'extrudeuse ne dépassant pas environ 30 minutes. Ces temps de séjour moyens dépendent bien entendu de la configuration de l'extrudeuse et, le cas échéant, de la vitesse de rotation de la ou des vis.

D'excellents résultats ont été obtenus par polymérisation continue d'$\varepsilon$-caprolactone en masse fondue à une température comprise entre 130 et 180 °C environ avec des temps de séjour moyens dans l'extrudeuse ne dépassant pas environ 30 minutes et généralement ne dépassant pas environ 15 minutes. Dans tous les cas, des taux de conversion et des rendements largement supérieurs à 95 % ont été obtenus.

Les extrudeuses telles que définies plus haut qui conviennent tout particulièrement à la réalisation du procédé selon l'invention devront être aptes à accomplir les fonctions suivantes : mélange des matières introduites, en l'occurence du ou des monomères et de l'amorceur de polymérisation, à moins que ceux-ci ne soient mélangés avant l'alimentation de l'extrudeuse, transport des matières du point d'alimentation à une filière et élimination de la chaleur de réaction. Elles seront avantageusement pourvues d'un évent de dégazage. Toutes les extrudeuses connues et usuelles basées sur le travail d'une, de deux ou de plusieurs vis , qu'elles soient co- ou contrarotatives, conviennent pour l'exécution du procédé selon l'invention. D'excellents résultats ont été obtenus avec des extrudeuses à deux vis co-rotatives.

Les joncs extrudés seront refroidis avant d'être granulés suivant les techniques bien connues de l'homme du métier.

Les poly-$\varepsilon$-caprolactones produites selon le procédé de l'invention se différencient notamment de celles produites à l'intervention de dérivés de l'étain, tels que l'octoate et le chlorure d'étain, par une distribution plus étalée des masses moléculaires moyennes, c'est-à-dire par un rapport $M_w/M_n$ plus élevé. Il est bien connu que l'étalement des masses moléculaires en poids constitue une caractéristique recherchée lorsqu'on souhaite mettre en oeuvre des polymères de masses moléculaires très élevées pour le façonnage en fondu d'articles de faible épaisseur, tels que des flacons ou encore des films, tels que des films soufflés.

La présente invention concerne également des poly-$\varepsilon$-caprolactones pouvant être obtenues par le procédé selon l'invention et caractérisées par une masse moléculaire moyenne en poids ($M_w$) au moins égale à 95 000 g/mole environ et par un rapport entre la masse moléculaire moyenne en poids et la masse moléculaire moyenne en nombre ($M_w/M_n$) au moins égal à 2, lesdites masses moléculaires moyennes étant évaluées par chromatographie par perméation de gel (GPC) dans le tétrahydrofuranne à 25 °C. Des poly-$\varepsilon$-caprolactones pouvant être obtenues par le procédé selon l'invention auxquelles on donne la préférence sont celles qui présentent un rapport $M_w/M_n$ au moins égal à 2,20. Habituellement, ce rapport ne dépasse pas 3,25 et plus particulièrement encore il ne dépasse pas 3. Des poly-$\varepsilon$-caprolactones qui sont tout particulièrement préférées sont constituées d'homopolymères de l'$\varepsilon$-caprolactone présentant une masse moléculaire moyenne en poids au moins égale à 115 000 g/mole environ et, par ailleurs, non supérieure à 200 000 g/mole environ et un rapport $M_w/M_n$ au moins égal à 2,20.

Les poly-$\varepsilon$-caprolactones selon l'invention conviennent pour le façonnage en fondu d'articles très divers, tels que par exemple des feuilles, des films et des flacons, par toutes les techniques usuelles de transformation des matières thermoplastiques, telles que le moulage, l'extrusion, l'extrusionsoufflage etc.

Les exemples qui suivent sont destinés à illustrer le procédé de l'invention.

Tous les exemples ont été réalisés dans un réacteur horizontal continu, de type extrudeuse, pourvu pour l'essentiel de :

- deux vis de transport (à pas constant) co-rotatives, autonettoyantes et à filets profonds ayant les dimensions suivantes :

| pas | 17,5 mm |
| --- | --- |
| longueur | 750 mm |
| diamètre | 78 mm; |

- un dôme faisant office d'évent de dégazage situé dans le haut du réacteur et pourvu d'un dispositif pour l'introduction de l'amorceur;
- une pompe à engrenage située en bout du réacteur destinée à pousser le polymère en fusion à travers une filière;
- une double enveloppe pour la circulation d'un fluide caloporteur;
- un capteur de température situé avant la pompe.

Dans les exemples 1 à 5, l'amorceur de polymérisation utilisé est le tri-isopropoxyde d'aluminium. Dans l'exemple 6, il s'agit du tri-sec-butoxyde d'aluminium.

Exemples 1 à 4

L'extrudeuse est alimentée à température ambiante avec de l'$\varepsilon$-caprolactone (teneur en eau : 92 mg/kg) avec un débit constant fixé à 6,6 kg/h.

Une solution filtrée et maintenue sous azote de triisopropoxyde d'aluminium dans l'heptane, titrant 21,8 g d'aluminium/kg de solution, est introduite à température ambiante au début de l'évent de dégazage (soit approximativement à 100 mm du début de la vis) avec un débit constant fixé à la valeur reprise dans le tableau en annexe.

L'extrudeuse est refroidie par circulation d'huile dans la double enveloppe maintenue à une température d'entrée de 130 °C et la vitesse de rotation des vis est maintenue constante et égale à 7 t/min.

La température de la poly-$\varepsilon$-caprolactone mesurée à la sortie de la vis (température de polymérisation) s'élève à 160 °C. Le temps de séjour moyen des matières dans l'extrudeuse est estimé à environ 15 minutes.

A la sortie de la filière, la poly-$\varepsilon$-caprolactone est refroidie et granulée. Les masses moléculaires moyennes en poids ($M_w$) et en nombre ($M_n$) sont évaluées par chromatographie par perméation de gel (GPC) dans le tétrahydrofuranne à 25 °C.

Dans le tableau I en annexe figurent, outre les débits d'alimentation en amorceur de polymérisation, les valeurs $M_w$ et $M_n$ mesurées et la valeur de $M_w$ calculée suivant l'équation détaillée plus haut.

Exemple 5

Cet exemple est conforme en tous points au mode opératoire général des exemples 1 à 4 , si ce n'est que le débit d'alimentation en $\varepsilon$-caprolactone s'est élevé à 9,7 kg/h, le débit d'alimentation en solution d'amorceur à 75 g/h (soit 0,0606 mole d'Al/h) et la vitesse de rotation des vis à 36 t/min. Dans ces conditions de polymérisation, la température de la poly-$\varepsilon$-caprolactone mesurée à la sortie de la vis (température de polymérisation) s'est élevée à 178 °C. Le temps de séjour moyen des matières dans l'extrudeuse est estimé à environ 6 minutes.

La poly-$\varepsilon$-caprolactone produite présente les caractéristiques suivantes :

| - $M_w$ (mesurée) | 128 000 g/mole |
| --- | --- |
| - $M_w$ (calculée) | 120 000 g/mole |
| - $M_w/M_n$ | 2,3 |

Exemple 6

Cet exemple est conforme en tous points au mode opératoire général de l'exemple 1, si ce n'est que le débit d'alimentation en ε-caprolactone s'est élevé à 10,3 kg/h, le débit d'alimentation en tri-sec-butoxyde d'aluminium (degré de pureté : 97 %) à 21 g/h, soit 0,0828 mole d'Al/h et la vitesse des vis à 7 t/min. Dans ces conditions de polymérisation, la température de la poly-ε-caprolactone mesurée à la sortie de la vis (température de polymérisation) s'est élevée à 180 °C. Le temps de séjour moyen des matières dans l'extrudeuse est estimé à environ 10 minutes.

La poly-ε-caprolactone produite présente les caractéristiques suivantes :

| | |
|---|---|
| - $M_w$ (mesurée) | 96 000 g/mole |
| - $M_w$ (calculée) | 93 000 g/mole |
| - $M_w/M_n$ | 2,2 |

Les taux de conversion et les rendements en poly-ε-caprolactone se sont élevés dans tous les exemples à > 99 %.

TABLEAU I

| N° de l'exemple | Débit d'alimentation amorceur, mole Al/h | $M_w$ calculé | $M_w$ mesuré | $M_w/M_n$ |
|---|---|---|---|---|
| 1 | 0,0581 | 85 000 | 87 000 | 2,5 |
| 2 | 0,0468 | 106 000 | 108 000 | 2,6 |
| 3 | 0,0388 | 128 000 | 132 000 | 2,5 |
| 4 | 0,0307 | 161 000 | 165 000 | 2,5 |

**Revendications**

1. Procédé pour la fabrication de poly-ε-caprolactones par polymérisation continue d'ε-caprolactone en masse fondue dans une extrudeuse à l'intervention d'un amorceur de polymérisation, caractérisé en ce que l'amorceur de polymérisation est choisi parmi les alkoxydes d'aluminium.

2. Procédé pour la fabrication de poly-ε-caprolactones suivant la revendication 1, caractérisé en ce que les alkoxydes d'aluminium répondent à la formule générale ci-dessous :

$$(R')_{3-n}\text{-}Al\text{-}(O\text{-}R)_n$$

dans laquelle :

- R et R' représentent indépendamment l'un de l'autre un radical hydrocarboné linéaire ou ramifié; et
- n représente un nombre allant de 1 à 3.

3. Procédé pour la fabrication de poly-ε-caprolactones suivant la revendication 2, caractérisé en ce que R et R' représentent indépendamment l'un de l'autre un radical alkyle linéaire ou ramifié contenant de 1 à 16 atomes de carbone.

4. Procédé pour la fabrication de poly-ε-caprolactones suivant la revendication 2, caractérisé en ce que R et R' sont identiques et représentent un radical alkyle linéaire ou ramifié contenant de 2 à 6 atomes de carbone.

5. Procédé pour la fabrication de poly-ε-caprolactones suivant la revendication 1, caractérisé en ce qu'on fabrique des poly-ε-caprolactones de masses moléculaires moyennes en poids ($M_w$) approximatives pré-établies par réglage des débits d'alimentation de l'extrudeuse en ε-caprolactone et en amorceur de polymérisation calculés en confor-

EP 0 626 405 B1

mité avec l'équation suivante :

$$M_w = \frac{2{,}25}{n} \times \frac{\text{débit d'alimentation en } \varepsilon\text{-caprolactone (en g/min)}}{\text{débit d'alimentation en amorceur (nb de moles d'Al/min)}}$$

dans laquelle n représente le nombre de liens aluminoxane-carbone présents dans une mole d'amorceur de polymérisation.

6. Procédé pour la fabrication de poly-$\varepsilon$-caprolactones suivant la revendication 1, caractérisé en ce que température de polymérisation est comprise entre 130 et 180 °C environ et en ce que le temps de séjour moyen dans l'extrudeuse ne dépasse pas 30 minutes.

7. Procédé pour la fabrication de poly-$\varepsilon$-caprolactones suivant la revendication 1, caractérisé en ce qu'il est appliqué à l'homopolymérisation de l'$\varepsilon$-caprolactone.

8. Poly-$\varepsilon$-caprolactones pouvant être obtenues par le procédé selon la revendication 1, caractérisées par une masse moléculaire moyenne en poids ($M_w$) au moins égale à 95 000 g/mole environ et par un rapport $M_w/M_n$ au moins égal à 2.

9. Poly-$\varepsilon$-caprolactones suivant la revendication 8, caractérisées par un rapport $M_w/M_n$ au moins égal à 2,20 et ne dépassant pas 3,25.

10. Poly-$\varepsilon$-caprolactones suivant la revendication 8, caractérisées en ce qu'elles sont constituées d'homopolymères de l'$\varepsilon$-caprolactone présentant une masse moléculaire moyenne en poids au moins égale à 115 000 g/mole environ et non supérieure à 200 000 g/mole environ et un rapport $M_w/M_n$ au moins égal à 2,20.

**Claims**

1. Process for the manufacture of poly-$\varepsilon$-caprolactones by continuous polymerization of $\varepsilon$-caprolactone as a melt in an extruder with the involvement of a polymerization initiator, characterized in that the polymerization initiator is chosen from aluminium alkoxides.

2. Process for the manufacture of poly-$\varepsilon$-caprolactones according to Claim 1, characterized in that the aluminium alkoxides correspond to the general formula below:

$$(R')_{3-n}\text{-Al-(O-R)}_n$$

in which:

- R and R' independently of each other denote a linear or branched hydrocarbon radical; and
- n denotes a number ranging from 1 to 3.

3. Process for the manufacture of poly-$\varepsilon$-caprolactones according to Claim 2, characterized in that R and R' independently of each other denote a linear or branched alkyl radical containing from 1 to 16 carbon atoms.

4. Process for the manufacture of poly-$\varepsilon$-caprolactones according to Claim 2, characterized in that R and R' are identical and denote a linear or branched alkyl radical containing from 2 to 6 carbon atoms.

5. Process for the manufacture of poly-$\varepsilon$-caprolactones according to Claim 1, characterized in that poly-$\varepsilon$-caprolactones are manufactured with approximate weight-average molecular masses ($M_w$) preestablished by adjusting the extruder feed rates of $\varepsilon$-caprolactone and of polymerization initiator, which are calculated in accordance with the following equation:

$$M_w = \frac{2.25}{n} \frac{\varepsilon\text{-caprolactone feed rate (in g/min)}}{\text{initiator feed rate (no. of moles of Al/min)}}$$

7

in which n denotes the number of aluminoxane-carbon bonds present in one mole of polymerization initiator.

6. Process for the manufacture of poly-$\varepsilon$-caprolactones according to Claim 1, characterized in that the polymerization temperature is approximately between 130 and 180°C and in that the mean residence time in the extruder does not exceed 30 minutes.

7. Process for the manufacture of poly-$\varepsilon$-caprolactones according to Claim 1, characterized in that it is applied to the homopolymerization of $\varepsilon$-caprolactone.

8. Poly-$\varepsilon$-caprolactones obtainable by the process according to Claim 1, characterized by a weight-average molecular mass ($M_w$) equal to at least approximately 95,000 g/mol and by an $M_w/M_n$ ratio of at least 2.

9. Poly-$\varepsilon$-caprolactones according to Claim 8, characterized by an $M_w/M_n$ ratio of at least 2.20 and not exceeding 3.25.

10. Poly-$\varepsilon$-caprolactones according to Claim 8, characterized in that they consist of $\varepsilon$-caprolactone homopolymers exhibiting a weight-average molecular mass equal to at least approximately 115,000 g/mol and not higher than approximately 200,000 g/mol, and an $M_w/M_n$ ratio of at least 2.20.

## Patentansprüche

1. Verfahren zur Herstellung von Poly-$\varepsilon$-caprolactonen durch kontinuierliche Polymerisation von $\varepsilon$-Caprolacton in der Schmelze in einem Extruder unter Beteiligung eines Polymerisationsinitiators, dadurch gekennzeichnet, daß der Polymerisationsinitiator unter den Aluminiumalkoxiden ausgewählt ist.

2. Verfahren zur Herstellung von Poly-$\varepsilon$-caprolactonen gemäß Anspruch 1, dadurch gekennzeichnet, daß die Aluminiumalkoxide der folgenden allgemeinen Formel:

$$(R')_{3-n}\text{-Al-(O-R)}_n$$

entsprechen, in der:

- R und R' unabhängig voneinander einen linearen oder verzweigten Kohlenwasserstoffrest darstellen; und
- n eine Zahl von 1 bis 3 darstellt.

3. Verfahren zur Herstellung von Poly-$\varepsilon$-caprolactonen gemäß Anspruch 2, dadurch gekennzeichnet, daß R und R' unabhängig voneinander einen linearen oder verzweigten Alkylrest, der 1 bis 16 Kohlenstoffatome enthält, darstellen.

4. Verfahren zur Herstellung von Poly-$\varepsilon$-caprolactonen gemäß Anspruch 2, dadurch gekennzeichnet, daß R und R' gleich sind und einen linearen oder verzweigten Alkylrest, der 2 bis 6 Kohlenstoffatome enthält, darstellen.

5. Verfahren zur Herstellung von Poly-$\varepsilon$-caprolactonen gemäß Anspruch 1, dadurch gekennzeichnet, daß man Poly-$\varepsilon$-caprolactone mit vorher festgelegten ungefähren Gewichtsmitteln der Molekülmasse ($M_w$) durch Einstellung der Einspeisungsdurchsätze des Extruders an $\varepsilon$-Caprolacton und an Polymerisationsinitiator, die in Übereinstimmung mit der folgenden Gleichung berechnet werden:

$$M_w = \frac{2{,}25}{n} \times \frac{\text{Einspeisungsdurchsatz an } \varepsilon\text{-Caprolacton (in g/min)}}{\text{Einspeisungsdurchsatz an Initiator (Anzahl Mole Al/min)}}$$

in der n die Anzahl von Bindungen Aluminoxan-Kohlenstoff darstellt, die in einem Mol Polymerisationsinitiator vorhanden sind, herstellt.

6. Verfahren zur Herstellung von Poly-$\varepsilon$-caprolactonen gemäß Anspruch 1, dadurch gekennzeichnet, daß die Polymerisationstemperatur zwischen etwa 130 und 180 °C liegt, und dadurch, daß die mittlere Verweilzeit im Extruder 30 Minuten nicht übersteigt.

**7.** Verfahren zur Herstellung von Poly-$\varepsilon$-caprolactonen gemäß Anspruch 1, dadurch gekennzeichnet, daß es auf die Homopolymerisation des $\varepsilon$-Caprolactons angewendet wird.

**8.** Poly-$\varepsilon$-caprolactone, die durch das Verfahren gemäß Anspruch 1 erhalten werden können, gekennzeichnet durch ein Gewichtsmittel der Molekülmasse ($M_w$) von wenigstens gleich etwa 95 000 g/mol und durch ein Verhältnis $M_w/M_n$ von wenigstens gleich 2.

**9.** Poly-$\varepsilon$-caprolactone gemäß Anspruch 8, gekennzeichnet durch ein Verhältnis $M_w/M_n$, das wenigstens gleich 2,20 ist und 3,25 nicht übersteigt.

**10.** Poly-$\varepsilon$-caprolactone gemäß Anspruch 8, dadurch gekennzeichnet, daß sie aus $\varepsilon$-Caprolacton-Homopolymeren bestehen, die ein Gewichtsmittel der Molekülmasse von wenigstens gleich etwa 115 000 g/mol und nicht höher als etwa 200 000 g/mol und ein Verhältnis $M_w/M_n$ von wenigstens gleich 2,20 aufweisen.